# EUROPEAN PATENT SPECIFICATION

(11) **EP 3 573 229 B1**
(45) Date of publication and mention of the grant of the patent: **02.09.2020**
(21) Application number: 17892298.5
(22) Date of filing: 28.12.2017
(51) Int. Cl.: H02S 40/30, H02J 3/24, A01G 25/16, F04B 17/00, H02J 7/35

(54) **CONTROL DEVICE AND METHOD FOR PHOTOVOLTAIC PUMP SYSTEMS**
STEUERUNGSVORRICHTUNG UND -VERFAHREN FÜR FOTOVOLTAISCHE PUMPENSYSTEME
PROCÉDÉ ET DISPOSITIF DE COMMANDE POUR SYSTÈMES DE POMPAGE PHOTOVOLTAÏQUE

(30) Priority: 19.01.2017 ES 201730057
(43) Date of publication of application: 27.11.2019
(73) Proprietor: Universidad Politécnica De Madrid, 28040 Madrid (ES)
(72) Inventor: FERNÁNDEZ RAMOS, José, 28040 Madrid (ES); NARVARTE FERNÁNDEZ, Luis, 28040 Madrid (ES); HOGAN TEVES DE ALMEIDA, Rita, 28040 Madrid (ES); BARATA CARRELO, Isaac, 28040 Madrid (ES); CARRASCO MORENO, Luis Miguel, 28040 Madrid (ES); LORENZO PIGUEIRAS, Eduardo, 28040 Madrid (ES)
(74) Representative: Ungria López, Javier
(86) International application number: PCT/ES2017/070856
(87) International publication number: WO 2018/134453

(56) References cited:
- CN-U- 203 575 261
- CN-U- 203 952 015
- CN-U- 205 848 220
- ES-U- 1 074 806
- JOSÉ FERNÁNDEZ-RAMOS ET AL: "Improvement of photovoltaic pumping systems based on standard frequency converters by means of programmable logic controllers", SOLAR ENERGY., vol. 84, no. 1, 1 January 2010 (2010-01-01), pages 101-109, XP055533159, GB ISSN: 0038-092X, DOI: 10.1016/j.solener.2009.10.013
- FERNANDEZ-RAMOS J et al.: "IMPROVEMENT OF PHOTOVOLTAIC PUMPING SYSTEMS BASED ON STANDARD FREQUENCY CONVERTERS BY MEANS OF PROGRAMMABLE LOGIC CONTROLLERS", SOLAR ENERGY, vol. 84, no. 1 1 January 2010 (2010-01-01), pages 101-109, XP055533159, ISSN: 0038-092X, DOI: doi:10.1016/j.solener.2009.10.013 Retrieved from the Internet: URL:htt://astro.ft.uam.es/old.TJM/tjm/webp ginas/practicas/manuales/ccd.html [retrieved on 2017-09-03]
- "DILSAD ENGIN AND MUSTAFA ENGIN. AUTO-TUNING OF PID PARAMETERS WITH PROGRAMMABLE LOGIC CONTROLLER", Proceedings of 2013 IEEE International Conference on Mechatronics and Automation, 7 August 2013 (2013-08-07), Retrieved from the Internet: URL:http://ieeexplore.ieee.org/xpls/icp.is p?arnumber=6618130 [retrieved on 2017-03-09]
- C. GOPAL et al.: "Renewable energy source water pumping systems -A literature review", Renewable and Sustainable Energy Reviews, vol. 25 30 May 2013 (2013-05-30), pages 351-370, XP055505488, DOI: doi:10.1016/j.rser.2013.04.012 Retrieved from the Internet: URL:htto://www.sciencedirect.com/sciencela nide/pii/S1364032113002633 [retrieved on 2017-03-09]

## Description

### OBJECT OF THE INVENTION

The present invention lies within the technical field of photovoltaic technologies and, more specifically, is related to control methods and systems for operating with solar photovoltaic pumping systems, applicable to the agricultural and renewable energies sector.

More specifically, the present invention relates to a control device and method able to be incorporated in any photovoltaic (PV) pumping system for stabilising the operation thereof with regard to fluctuations in the photovoltaic power produced by the sharp variation of solar radiation.

### BACKGROUND OF THE INVENTION

Photovoltaic (PV) pumping systems comprise multiple photovoltaic modules for capturing solar radiation, connected to the extraction pump by one or several variable-frequency drives which pumps the water during the hours of sunlight. The flow of direct solar pumping is not constant, since the irradiation is variable, based on the hours of the day or meteorological phenomena.

In current PV pumping systems, an intermittence of photovoltaic power, for example due to the passing of a cloud, produces a destabilisation of the variable-frequency drive of the pumping system, causing an abrupt stoppage. This stoppage is not merely an aesthetic issue, but rather causes two problems that affect the reliability and lifespan of the PV pumping system. The first is a water hammer, which reduces the lifespan of the hydraulic system. The second is the wave reflection of the electrical voltage between the output stage of the variable-frequency drive and the pump motor, which produces surges that can damage both components.

One example of a PV pumping system which aims at stabilising the pumping of a water extraction pump for achieving an irrigation with constant pressure and flow is described in ES 1074806 U. This system has one or more booster pumps that have a greater flow than the maximum flow of the extraction pump and a gate valve, or valve which opens by pressure, which prevents the passage of water through the booster pump. Furthermore, this direct solar pumping system also has an auxiliary storage container, the capacity of which is a few minutes of flow of the booster pump or pumps and which has level sensors. This is a very specific configuration of a PV pump control system which, therefore, cannot be applied to other pumping systems with other configurations. Document "Improvement of photovoltaic pumping systems based on standard frequency converters by means of programmable logic controllers" solar energy, vol. 84, no. 1, 101-109 GB discloses a control method for photovoltaic pumping systems with the following steps: measuring an output voltage from a photovoltaic generator; establishing a setpoint voltage corresponding to a maximum power point of the photovoltaic generator for variable pressure and flow pumping systems and corresponding to a point representing power demanded from the photovoltaic generator by the pumping system for constant pressure and flow pumping systems; an algorithm of proportional-integral-derivative control, PID, which acts on at least one variable frequency drive connected to the output of the photovoltaic generator and which establishes an operating frequency.

The objective technical problem presented is to thus provide a control method and means for stabilising the operation of any photovoltaic pumping system, including, for example, the one described in ES 1074806 U, with regard to PV power intermittency caused, for example, by the passing of a cloud.

### DESCRIPTION OF THE INVENTION

The present invention is aimed at solving the aforementioned problem, resolving the drawbacks of the mentioned solutions of the state of the art, by means of a device with a control method that prevents the destabilisation of variable-frequency drives in photovoltaic (PV) pumping systems when there are PV power fluctuations. The control device and method proposed allow the standard control system of PV pumping systems to be used, eliminating the problems that occur when there are sharp drops in available PV power, due to the passing of a cloud, for example.

A first aspect of the invention relates to a control method for PV pumping systems, comprising:
- a proportional-integral-derivative (PID) algorithm, which acts on at least one variable-frequency drive connected to the output of the photovoltaic generator and which establishes an operating frequency, the PID control algorithm being configured for:
   - reducing the operating frequency of the variable-frequency drive when the measured output voltage of the photovoltaic generator is less than an established reference voltage,
   - increasing the operating frequency of the variable-frequency drive when the measured output voltage of the photovoltaic generator is greater than the established reference voltage;
   wherein the reference voltage is established as:
   a voltage corresponding to a maximum power point of the photovoltaic generator for pumping systems with variable flow and pressure; or
   a voltage corresponding to a power point demanded from the photovoltaic generator by the pumping system for pumping systems with constant flow and pressure.

The control method further comprises the following steps:
- measuring an output voltage of a photovoltaic generator,
- establishing a first threshold voltage value that is greater than a minimum operating voltage of the variable-frequency drive;
- when the measured output voltage of the photovoltaic generator drops below the first threshold voltage value, deactivating the PID control algorithm and establishing:
   - a reference frequency for the variable-frequency drive that is lower than the established operating frequency thereof, and
   - a minimum gradient of sudden deceleration to make said variable-frequency drive enter into a regenerative braking mode that produces an increase in the operating voltage thereof.

Another aspect of the invention relates to a control device that implements the previously described method for the use thereof in photovoltaic pumping systems that comprise at least one pumping unit connected to the output of one or more variable-frequency drives which, in turn, are connected to the output of one or more photovoltaic generators. The control device for photovoltaic systems proposed comprises the following components:
- a proportional-integral-derivative (PID) controller, configured for:
   - reducing the operating frequency of the variable-frequency drive when at the output of the photovoltaic generator the PID controller measures a voltage lower than a reference voltage corresponding to a maximum power point of the photovoltaic generator for pumping systems with variable flow and pressure and corresponding to a power point demanded from the photovoltaic generator by the pumping unit for pumping systems with constant flow and pressure,
   - increasing the operating frequency of the variable-frequency drive when at the output of the photovoltaic generator the PID controller measures a voltage greater than the reference voltage;
- processing means (for example a PLC controller), configured to deactivate the PID controller when at the output of the photovoltaic generator the PID controller measures a voltage below a first threshold voltage value, the first value being greater than a minimum operating voltage of the variable-frequency drive; and, deactivating the PID controller, establishing a reference frequency for the variable-frequency drive lower than the operating frequency thereof, and establishing a minimum gradient of sudden deceleration to make the variable-frequency drive enter into a regenerative braking mode that produces an increase in the operating voltage of the variable-frequency drive.

The advantages of the present invention with respect to the solutions of the state of the art are essentially:
- Robustness with regard to intermittency of photovoltaic power.
- Compatibility with existing standard control systems for PV pumping systems.
- Increase in the reliability and durability of the photovoltaic pumping systems by solving the problems associated with abrupt stoppage of the variable-frequency drive caused by the intermittency of photovoltaic power.

### BRIEF DESCRIPTION OF THE FIGURES

What follows is a very brief description of a series of drawings that aid in better understanding the invention, and which are expressly related to an embodiment of said invention that is presented by way of a non-limiting example of the same.

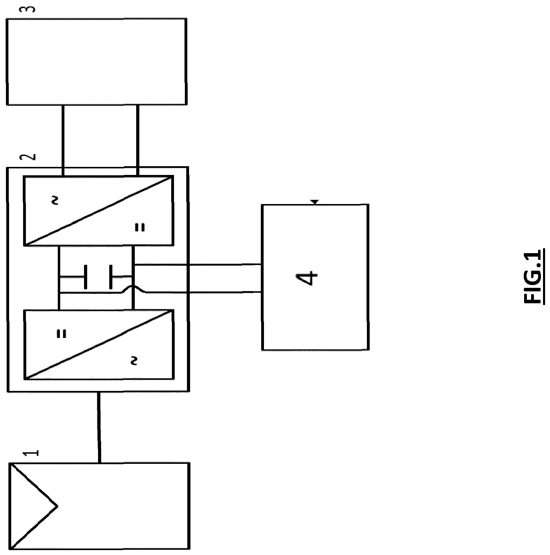

FIGURE 1.- Shows a block diagram of a photovoltaic pumping system with a control device for stabilising photovoltaic power, according to a preferred embodiment of the invention.

### PREFERRED EMBODIMENT OF THE INVENTION

Figure 1 shows a block diagram of the architecture of a PV pumping system with the photovoltaic power control that is proposed.

From a general point of view, pumping systems are made up of the following parts:
- At least one photovoltaic generator (1), in turn made up of electrically interconnected modules constituting a DC-producing unit with a support structure.
- At least one variable-frequency drive (2) which acts as a power conditioner, able to vary the frequency and output voltage based on the power available from the photovoltaic generator (1).

- At least one pumping unit (3), for example a water pump actuated by an electric motor and which together constitute a motor pump.
- A control device (4), for example a programmable logic controller (PLC), such as the very PLC that is integrated in many variable-frequency drives (2), which incorporates safety and control functions.

The control device (4) measures the output voltage of the PV generator (1) at all times and takes measurements of the DC bus of each variable-frequency drive (2), and by means of a proportional-integral-derivative (PID) controller, uses these measurements for:
- reducing the operating frequency of the variable-frequency drives (2) when the voltage of the PV generator (1) is less than the reference voltage,
- increasing the operating frequency of the variable-frequency drives (2) when the voltage is greater than the reference voltage.

The PID control algorithm is usually implemented in the firmware of all variable-frequency drives (2) and industrial controllers.

The reference voltage is established by the control device (4) by means of any algorithm tracking the maximum power point of the PV generator (1). The reference voltage is established as:
- for the case of pumping at variable pressures and flows, the voltage corresponding to the maximum power point of the PV generator (1);
- for the case of pumping at a constant pressure and flow, the voltage at which the photovoltaic generator (1) delivers the power demanded by the pumps (3) for working at the pressure and flow required by the hydraulic pumping/irrigation system.

The algorithm of the PID control regulates the operating frequency of the variable-frequency drives (2) and, thus, the consumption thereof, so that the voltage of the PV generator (1) continuously measured by the control device (4) is kept in within a reference voltage and above the minimum power voltage of the variable-frequency drives (2). This PID control algorithm is, therefore, is a feedback-type algorithm, the input control variable thereof being the output voltage of the PV generator (1); and the output control variable being the operating frequency of the variable-frequency drives (2).

The configuration of the control parameters (also known as "tuning") of the PID controller is done to minimise the frequency fluctuations and, thus, guarantee a stable operation of the system. However, this type of tuning has a problem in that when there is a sharp drop in PV power, due to the passing of a cloud over the PV generator (1), for example, the output voltage of the PV generator (1) experiences a sharp drop before the PID control algorithm can react and lower the frequency of the variable-frequency drives (2) in order for the voltage of the PV generator (1) to return to the reference voltage. On many occasions the power reduction of the variable-frequency drive (2) is large enough to cause the output voltage of the PV generator (1) required at the variable-frequency drive (2) input to fall below the minimum level, causing an alarm signal and an abrupt stoppage of the variable-frequency drives (2). This abrupt stoppage can have highly negative consequences, both in the hydraulic system as well as in the electrical system, which can dramatically reduce the durability thereof.

To solve this problem, the control device (4) implements a control method that acts when it detects a sharp drop in the voltage of the PV generator (1) measured by said control device (4). This sharp drop detected in the voltage of the PV generator (1) is, in turn, caused by a sharp drop in the photovoltaic power caused by the passing of a cloud, for example. To solve the possible destabilisation of the variable-frequency drive (2) and the resulting abrupt stoppage due to the sudden drop in PV power, the control device (4) is configured to execute the following control steps:
- The PID control algorithm is deactivated when the voltage of the PV generator (1) goes below a first value of a certain threshold voltage. Said first threshold voltage value is established as a voltage that is greater than a minimum operating voltage of the variable-frequency drives (2).
- A reference frequency or voltage for the variable-frequency drives (2) much lower than the current value is established, as well as a minimum gradient of sudden deceleration. The combination of a smaller frequency and a very sudden deceleration gradient causes the variable-frequency drive (2) to enter into regenerative braking mode, the consequence of which is a sudden increase in the voltage of the DC bus thereof. This voltage increase compensates for the voltage drop produced in the PV generator (1).
- When the voltage in the PV generator (1) exceeds a second threshold voltage value, the PID control algorithm is activated again. This avoids the destabilisation of the variable-frequency drive (2), the abrupt stoppage, and the damaging effects of the same. When the PID control algorithm is reactivated, the variable-frequency drive (2) is once again controlled by the PID controller and does not experience any stoppage due to an alarm. The total duration of the process can be less than one second, and therefore the impact on the hydraulic pumping system is imperceptible.

## Claims

1. A control method for photovoltaic pumping systems comprising:
- measuring an output voltage of a photovoltaic generator (1),
- establishing a reference voltage corresponding to a maximum power point of the photovoltaic generator (1) for pumping systems with variable flow and pressure and corresponding to a power point demanded from the photovoltaic generator (1) by the pumping system for pumping systems with constant flow and pressure,
- a proportional-integral-derivative (PID) algorithm, which acts on at least one variable-frequency drive (2) connected to the output of the photovoltaic generator (1) and which establishes an operating frequency, the PID control algorithm being configured for:
- reducing the operating frequency of at least one variable-frequency drive (2) when the measured output voltage of the photovoltaic generator (1) is lower than the established reference voltage,
- increasing the operating frequency of the at least one variable-frequency drive (2) when the measured output voltage of the photovoltaic generator (1) is greater than the established reference voltage;
the control method further comprising the following steps:
- establishing a first threshold voltage value that is greater than a minimum operating voltage of the at least one variable-frequency drive (2);
- when the voltage measured at the output of the photovoltaic generator (1) drops below the first threshold voltage value, deactivating the PID control algorithm and establishing a reference frequency for the at least one variable-frequency drive (2) that is lower than the operating frequency, and establishing a minimum gradient of sudden deceleration to make the at least one variable-frequency drive (2) enter into a regenerative braking mode which produces an increase of the operating voltage of the at least one variable-frequency drive (2).

2. The method according to claim 1, **characterised in that** it further comprises establishing a second threshold voltage value that is greater than the first threshold voltage value and when the voltage in the photovoltaic generator (1) exceeds the second threshold voltage value, activating the PID control algorithm.

3. A control device (4) for photovoltaic pumping systems that comprise at least one pumping unit (3) connected to the output of at least one variable-frequency drive (2) which, in turn, is connected to the output of at least one photovoltaic generator (1), the control device comprising a proportional-integral-derivative (PID) controller, configured for:
- reducing the operating frequency of the variable-frequency drive (2) when at the output of the photovoltaic generator (1) the PID controller measures a voltage lower than a reference voltage corresponding to a maximum power point of the photovoltaic generator (1) for pumping systems with variable flow and pressure and corresponding to a power point demanded from the photovoltaic generator (1) by the pumping unit for pumping systems (3) with constant flow and pressure,
- increasing the operating frequency of the variable-frequency drive (2) when at the output of the photovoltaic generator (1) the PID controller measures a voltage that is greater than the reference voltage;
the control device (4) also comprising processing means configured to deactivate the PID controller when at the output of the photovoltaic generator (1) the PID controller measures a voltage below a first threshold voltage value, the first value being greater than a minimum operating voltage of the variable-frequency drive (2); and, deactivating the PID controller, establishing a reference frequency for the variable-frequency drive (2) lower than the operating frequency thereof, and establishing a minimum gradient of sudden deceleration to make the variable-frequency drive (2) enter into a regenerative braking mode that produces an increase in the operating voltage of the variable-frequency drive.(2).

4. The control device (4) according to claim 3, **characterised in that** the processing means are configured to also activate the PID controller when at the output of the photovoltaic generator (1) the PID controller measures a voltage that is greater than a second threshold voltage value which, in turn, is greater than the first threshold voltage value.

5. The control device according to any of claims 3-4, **characterised in that** it is a programmable logic controller (PLC).

6. The control device according to claim 5, **characterised in that** it is connected to the control of the variable-frequency drive (2).

7. The control device according to claim 5, **characterised in that** it is integrated in the variable-frequency drive (2).

## Patentansprüche

1. Steuerverfahren für Photovoltaik-Pumpsysteme, umfassend:
- Messen einer Ausgangsspannung eines Photovoltaikgenerators (1),
- Festlegen einer Referenzspannung, die einem maximalen Leistungspunkt des Photovoltaikgenerators (1) für Pumpsysteme mit variablem Durchfluss und Druck entspricht und einem Leistungspunkt entspricht, der vom Pumpsystem für Pumpsysteme mit konstantem Durchfluss und Druck vom Photovoltaikgenerator (1) gefordert wird,
- einen PID-Algorithmus (Proportional-Integral-Derivative-Algorithmus), der auf mindestens einen Frequenzumrichter (2) wirkt, der mit dem Ausgang des Photovoltaikgenerators (1) verbunden ist und der eine Betriebsfrequenz festlegt, wobei der PID-Steueralgorithmus konfiguriert ist zum:
- Verringern der Betriebsfrequenz mindestens eines Frequenzumrichters (2), wenn die gemessene Ausgangsspannung des Photovoltaikgenerators (1) niedriger als die festgelegte Referenzspannung ist,
- Erhöhen der Betriebsfrequenz des mindestens einen Frequenzumrichters (2), wenn die gemessene Ausgangsspannung des Photovoltaikgenerators (1) größer als die festgelegte Referenzspannung ist;
wobei das Steuerverfahren ferner die folgenden Schritte umfasst:
- Festlegen eines ersten Schwellenspannungswerts, der größer als eine minimale Betriebsspannung des mindestens einen Frequenzumrichters (2) ist;
- wenn die am Ausgang des Photovoltaikgenerators (1) gemessene Spannung unter den ersten Schwellenspannungswert fällt, Deaktivieren des PID-Steueralgorithmus und Festlegen einer Referenzfrequenz für den mindestens einen Frequenzumrichter (2), die niedriger als die Betriebsfrequenz ist, und Festlegen eines minimalen Gradienten einer plötzlichen Verzögerung, um den mindestens einen Frequenzumrichter (2) in einen regenerativen Bremsmodus eintreten zu lassen, der eine Erhöhung der Betriebsspannung des mindestens einen Frequenzumrichters (2) hervorruft.

2. Verfahren nach Anspruch 1, **dadurch gekennzeichnet, dass** es ferner das Festlegen eines zweiten Schwellenspannungswerts umfasst, der größer als der erste Schwellenspannungswert ist, und wenn die Spannung in dem Photovoltaikgenerator (1) den zweiten Schwellenspannungswert überschreitet, Aktivieren des PID-Steueralgorithmus.

3. Steuervorrichtung (4) für Photovoltaik-Pumpsysteme, die mindestens eine Pumpeinheit (3) umfassen, die mit dem Ausgang mindestens eines Frequenzumrichters (2) verbunden ist, der wiederum mit dem Ausgang mindestens eines Photovoltakikgenerators (1) verbunden ist, wobei die Steuervorrichtung eine PID-Steuerung (Proportional-Integral-Derivative-Steuerung) umfasst, die konfiguriert ist zum:
- Verringern der Betriebsfrequenz des Frequenzumrichters (2), wenn die PID-Steuerung am Ausgang des Photovoltaikgenerators (1) eine Spannung misst, die niedriger als eine Referenzspannung ist, die einem maximalen Leistungspunkt des Photovoltaikgenerators (1) für Pumpsysteme mit variablem Durchfluss und Druck entspricht und einem Leistungspunkt entspricht, der von der Pumpeinheit für Pumpsysteme (3) mit konstantem Durchfluss und Druck vom Photovoltaikgenerator (1) gefordert wird,
- Erhöhen der Betriebsfrequenz des Frequenzumrichters (2), wenn die PID-Steuerung am Ausgang des Photovoltaikgenerators (1) eine Spannung misst, die größer als die Referenzspannung ist;
wobei die Steuervorrichtung (4) auch Verarbeitungsmittel umfasst, die konfiguriert sind, die PID-Steuerung zu deaktivieren, wenn am Ausgang des Photovoltaikgenerators (1) die PID-Steuerung eine Spannung unter einem ersten Schwellenspannungswert misst, wobei der erste Wert größer als eine minimale Betriebsspannung des Frequenzumrichters (2) ist; und, Deaktivieren der PID-Steuerung, Festlegen einer Referenzfrequenz für den Frequenzumrichter (2), die niedriger als deren Betriebsfrequenz ist, und Festlegen eines minimalen Gradienten einer plötzlichen Verzögerung, um den Frequenzumrichter (2) in einen regenerativen Bremsmodus zu versetzen, der eine Erhöhung der Betriebsspannung des Frequenzumrichters.(2) hervorruft.

4. Steuervorrichtung (4) nach Anspruch 3, **dadurch gekennzeichnet, dass** die Verarbeitungsmittel konfiguriert sind, auch die PID-Steuerung zu aktivieren, wenn am Ausgang des Photovoltaikgenerators (1) die PID-Steuerung eine Spannung misst, die größer als ein zweiter Schwellenspannungswert ist, der wiederum größer als der erste Schwellenspannungswert ist.

5. Steuervorrichtung nach einem der Ansprüche 3 bis 4, **dadurch gekennzeichnet, dass** sie eine programmierbare Logiksteuerung (PLC) ist.

6. Steuervorrichtung nach Anspruch 5, **dadurch gekennzeichnet, dass** sie mit der Steuerung des Frequenzumrichters (2) verbunden ist.

7. Steuervorrichtung nach Anspruch 5, **dadurch gekennzeichnet, dass** sie in dem Frequenzumrichter (2) integriert ist.

## Revendications

1. Procédé de contrôle pour des systèmes de pompage photovoltaïque comprenant :
- la mesure d'une tension de sortie d'un générateur photovoltaïque (1),
- l'établissement d'une tension de référence correspondant à un point de puissance maximale du générateur photovoltaïque (1) pour des systèmes de pompage à débit et à pression variables et correspondant à un point de puissance demandé du générateur photovoltaïque (1) par le système de pompage pour des systèmes de pompage à débit et à pression constants,
- un algorithme proportionnel-intégral-dérivé (PID), qui agit sur au moins un entraînement à fréquence variable (2) connecté à la sortie du générateur photovoltaïque (1) et qui établit une fréquence de fonctionnement, l'algorithme de contrôle PID étant configuré pour :
- la réduction de la fréquence de fonctionnement d'au moins un entraînement à fréquence variable (2) lorsque la tension de sortie mesurée du générateur photovoltaïque (1) est inférieure à la tension de référence établie,
- l'augmentation de la fréquence de fonctionnement du au moins un entraînement à fréquence variable (2) lorsque la tension de sortie mesurée du générateur photovoltaïque (1) est supérieure à la tension de référence établie ;
le procédé de contrôle comprenant en outre les étapes suivantes :
- l'établissement d'une première valeur seuil de tension qui est supérieure à une tension de fonctionnement minimale du au moins un entraînement à fréquence variable (2) ;
- lorsque la tension mesurée à la sortie du générateur photovoltaïque (1) descend en dessous de la première valeur seuil de tension, la désactivation de l'algorithme de contrôle PID et l'établissement d'une fréquence de référence pour l'au moins un entraînement à fréquence variable (2) qui est inférieure à la fréquence de fonctionnement, et l'établissement d'un gradient minimal de décélération soudaine pour faire entrer l'au moins un entraînement à fréquence variable (2) dans un mode de freinage régénératif qui produit une augmentation de la tension de fonctionnement du au moins un entraînement à fréquence variable (2).

2. Procédé selon la revendication 1, **caractérisé en ce qu'**il comprend en outre l'établissement d'une deuxième valeur seuil de tension qui est supérieure à la première valeur seuil de tension et lorsque la tension dans le générateur photovoltaïque (1) dépasse la deuxième valeur seuil de tension, l'activation de l'algorithme de contrôle PID.

3. Dispositif de contrôle (4) pour des systèmes de pompage photovoltaïque qui comprennent au moins une unité de pompage (3) connectée à la sortie d'au moins un entraînement à fréquence variable (2) qui, à son tour, est connecté à la sortie d'au moins un générateur photovoltaïque (1), le dispositif de contrôle comprenant un contrôleur proportionnel-intégral-dérivé (PID), configuré pour :
- la réduction de la fréquence de fonctionnement de l'entraînement à fréquence variable (2) lorsque, à la sortie du générateur photovoltaïque (1), le contrôleur PID mesure une tension inférieure à une tension de référence correspondant à un point de puissance maximale du générateur photovoltaïque (1) pour des systèmes de pompage à débit et à pression variables et correspondant à un point de puissance demandé du générateur photovoltaïque (1) par l'unité de pompage pour des systèmes de pompage (3) à débit et à pression constants,
- l'augmentation de la fréquence de fonctionnement de l'entraînement à fréquence variable (2) lorsque, à la sortie du générateur photovoltaïque (1), le contrôleur PID mesure une tension qui est supérieure à la tension de référence ;
le dispositif de contrôle (4) comprenant également des moyens de traitement configurés pour désactiver le contrôleur PID lorsque, à la sortie du générateur photovoltaïque (1), le contrôleur PID mesure une tension en dessous d'une première valeur seuil de tension, la première valeur étant supérieure à une tension de fonctionnement minimale de l'entraînement à fréquence variable (2) ; et, la désactivation du contrôleur PID, l'établissement d'une fréquence de référence pour l'entraînement à fréquence variable (2) inférieure à la fréquence de fonctionnement de celui-ci, et l'établissement d'un gradient minimal de décélération soudaine pour faire entrer l'entraînement à fréquence variable (2) dans un mode de freinage régénératif qui produit une augmentation de la tension de fonctionnement de l'entraînement à fréquence variable.(2).

4. Dispositif de contrôle (4) selon la revendication 3, **caractérisé en ce que** les moyens de traitement sont configurés pour activer également le contrôleur PID lorsque, à la sortie du générateur photovoltaïque (1), le contrôleur PID mesure une tension qui est supérieure à une deuxième valeur seuil de tension qui, à son tour, est supérieure à la première valeur seuil de tension.

5. Dispositif de contrôle selon l'une quelconque des revendications 3 à 4, **caractérisé en ce que** c'est un contrôleur logique programmable (PLC).

6. Dispositif de contrôle selon la revendication 5, **caractérisé en ce qu'il** est connecté au contrôle de l'entraînement à fréquence variable (2).

7. Dispositif de contrôle selon la revendication 5, **caractérisé en ce qu'il** est intégré dans l'entraînement à fréquence variable (2).
